# DEMANDE DE BREVET EUROPEEN

(11) **EP 2 469 448 A1**
(43) Date de publication de la demande: **27.06.2012**
(21) Numéro de dépôt: 11194376.7
(22) Date de dépôt: 19.12.2011
(51) Int. Cl.: G06F 21/02, G06F 21/00

(54) **Procédé d'activation d'un mécanisme, et dispositif mettant en oeuvre un tel procédé**

(30) Priorité: 22.12.2010 FR 1061042
(71) Demandeur: Cassidian SAS, 78990 Elancourt (FR)
(72) Inventeur: Folscheid, Bruno, 78150 Le Chesnay (FR)
(74) Mandataire: Kingolo, Alain

(57) **Abrégé**

L'invention concerne un procédé d'activation d'une fonction telle un déverrouillage d'un clavier de téléphone mobile au moyen d'une séquence de consignes {*x₁*, ..., *xₙ*} de longueur n fournie à un utilisateur qui doit valider cette séquence pour activer la fonction. On détermine la séquence de consignes {*x₁*, ..., *xₙ*} de façon aléatoire, et pour chaque consigne *xᵢ*, le procédé comprend les étapes suivantes : émission d'une consigne *xᵢ* vers l'utilisateur ; réception d'une réponse *yᵢ* de l'utilisateur ; analyse pour validation de la consigne *xᵢ* ; la consigne *xᵢ* est dite validée lorsque *yᵢ* est une réponse valable pour *xᵢ* et que le temps écoulé entre l'émission de *xᵢ* et la réception de *yᵢ* est inférieur à une durée Δ*ᵢ* impartie ; si la consigne *xᵢ* n'est pas validée alors la fonction n'est pas activée ; émission de la consigne suivante, si elle existe, après validation de *xᵢ* ; activation de la fonction lorsqu'au moins la dernière consigne émise est validée.

## Description

### Domaine technique

La présente invention entre dans le domaine des systèmes d'interfaçage homme-machine.

L'invention concerne plus particulièrement l'activation d'un mécanisme en s'assurant de la présence de l'utilisateur et de sa volonté.

L'invention trouvera une application particulière, mais aucunement limitative, dans la validation de la présence et de la volonté d'un utilisateur pour le déverrouillage d'un mécanisme présent sur un appareil comportant une interface homme-machine, tel qu'un téléphone mobile.

### Etat de la technique antérieur

De manière connue, un mécanisme s'exécutant sur un appareil peut être activé par :
- une boite de dialogue demandant à l'utilisateur de confirmer son intention ; sur un téléphone mobile par exemple, le clavier bascule en mode verrouillé au bout d'un certain temps, c'est-à-dire que le simple appui sur une touche du clavier n'enclenche pas l'action escomptée ; le déverrouillage nécessitant l'appui successif sur plusieurs touches prédéterminées selon une séquence prédéfinie ;
- la saisie d'un mot de passe comme c'est le cas pour l'activation du mécanisme de déverrouillage d'une session sur un ordinateur, d'un téléphone portable ou d'un dispositif communiquant (PDA, etc.) ;
- l'utilisation d'un code se trouvant dans un « trousseau de clé » accessible par l'appareil après autorisation de l'utilisateur.

Un inconvénient majeur de l'activation d'un mécanisme par le premier ou le second type de procédé est que l'activation du mécanisme ne permet pas de s'assurer de la volonté de l'utilisateur. En effet, cette saisie peut devenir une saisie réflexe.

L'inconvénient majeur du troisième type de procédé est que l'utilisateur ne se souvient pas forcément des applications auxquelles il a donné le droit d'accéder à son trousseau de clés et que la demande d'autorisation de l'utilisation d'une de ses clés (mot de passe, par exemple.) ne lui est plus soumise.

### Exposé de l'invention

L'invention a pour but de pallier les inconvénients de l'état de la technique en proposant une solution permettant de valider l'intention de l'utilisateur, de caractériser la présence et/ou la volonté de l'utilisateur d'activer un mécanisme.

Avantageusement, cette caractérisation est rendue possible par la génération d'une séquence de consignes aléatoires. L'utilisateur doit proposer une réponse à chacune des consignes en une durée impartie. La durée globale mise à valider l'ensemble de la séquence peut également être limitée à une autre durée impartie.

Pour ce faire, la présente invention concerne un procédé d'activation d'un mécanisme au moyen d'une séquence de consignes {*x₁*, ..., *xₙ*} de longueur n fournie à un utilisateur qui doit valider cette séquence pour activer ledit mécanisme. Selon l'invention, on détermine la séquence de consignes {*x₁,* ..., *xₙ*} de façon aléatoire, et pour chaque consigne *xᵢ*, le procédé comprend les étapes de :
- émission d'une consigne *xᵢ* vers l'utilisateur,
- réception d'une réponse *yᵢ* de l'utilisateur,
- analyse pour validation de la consigne *xᵢ* ; la consigne *xᵢ* est dite validée lorsque *yᵢ* est une réponse valable pour *xᵢ* et que le temps écoulé entre l'émission de *xᵢ* et la réception de *yᵢ* est inférieur à une durée Δ*ᵢ* impartie ; si la consigne *xᵢ* n'est pas validée alors le mécanisme n'est pas activé ;
- émission de la consigne suivante, si elle existe, après validation de *xᵢ* ;
- activation du mécanisme lorsqu'au moins la dernière consigne émise est validée.

Avec le procédé selon l'invention, le caractère aléatoire n'autorise plus une activation machinale du mécanisme. Dans la mesure où la séquence, qui est une succession temporelle des consignes, change à chaque tentative, le procédé selon l'invention sollicite pleinement la volonté de l'utilisateur et on valide ainsi sa véritable intention d'activer le mécanisme. Par ailleurs, le procédé selon l'invention évite bien toute manipulation non volontaire. Sur un téléphone portable par exemple, aucune fonction telle que l'activation du clavier ne peut se faire de façon non intentionnelle.

Selon une caractéristique avantageuse de l'invention, le mécanisme peut être activé lorsqu'au moins la dernière consigne est validée et qu'une durée définie en fonction de chaque temps écoulé entre une émission d'une consigne xᵢ et une réception d'une réponse yᵢ correspondante est inférieure à une durée Δ impartie. On introduit ainsi une temporisation globale qui peut être une contrainte supplémentaire permettant de limiter la durée pendant laquelle il est possible de saisir l'ensemble des réponses ou une partie d'entre elles.

Selon une première variante de l'invention, la séquence aléatoire peut être prédéterminée. C'est-à-dire que les consignes sont prédéfinies de façon aléatoire avant d'entamer l'émission de l'ensemble de la séquence. Pour ce faire, à chaque initialisation du procédé, on peut déterminer une séquence aléatoire, puis émettre ces consignes une à une.

Selon une autre variante avantageuse de l'invention, chaque consigne peut être déterminée aléatoirement juste avant son émission.

A titre d'exemple non limitatif, la fonction aléatoire peut être une fonction pseudo-aléatoire fournie par un système d'exploitation ou l'utilisation d'une décimale du tick horaire de référence d'un processeur. La distribution choisie peut être uniforme sur l'ensemble des valeurs, cependant on peut choisir une autre distribution en fonction des besoins.

Avantageusement, n est choisi, notamment de façon aléatoire, dans l'intervalle [*n₁, n₂*] avec *n₁* et *n₂* dépendant du mécanisme. La longueur n peut dépendre de la criticité du lancement du mécanisme. Cette longueur peut par exemple être courte lorsque l'utilisateur souhaite déverrouiller son téléphone portable, par exemple *n₁* et *n₂* égales à deux et cinq respectivement, et plus longue lorsque l'utilisateur souhaite effacer son carnet d'adresse, par exemple *n₁* et *n₂* égales à cinq et dix respectivement. D'autres plages peuvent évidemment être envisagées.

Selon une caractéristique avantageuse de l'invention, au moins une consigne *xᵢ* est une consigne visuelle. Une consigne visuelle peut avoir pour fonction d'indiquer ou de désigner un élément tel une touche d'un clavier.

Une consigne *xᵢ* peut également être au moins une consigne sonore vers l'utilisateur. Par exemple, la consigne peut être le nom d'une lettre, d'un chiffre, d'une couleur, la description d'un mouvement à effectuer (sans que ces exemples ne soient limitatifs).

Une réponse *yᵢ* peut être au moins une réponse de contact avec un dispositif tel qu'un clavier, un écran tactile ou tout dispositif d'interfaçage entre l'utilisateur et l'appareil mettant en oeuvre le mécanisme. Par exemple, la réponse peut être la pression du doigt sur une touche, un appui ou un mouvement effectué sur ledit dispositif d'interfaçage, en d'autres termes une réponse de contact par sélection d'une touche dudit dispositif d'interfaçage.

Avec le procédé selon l'invention, le mécanisme à activer peut être une fonction ou une tache applicative interne à l'appareil mettant en oeuvre le procédé selon l'invention. Une fonction peut être l'activation d'un dispositif d'interfaçage tel un clavier mécanique ou un clavier sur écran tactile.

On peut également envisager qu'une consigne *xᵢ* soit une question éventuellement à réponses multiples. Une réponse *yᵢ* sera alors valable si c'est l'une des réponses valables pour cette question.

De préférence, selon un mode de mise en oeuvre de l'invention, la séquence de consignes {*x₁,* ..., *xₙ*} peut comprendre une suite de touches d'un clavier ; l'émission d'une consigne consistant à indiquer par émission lumineuse une touche correspondante. L'émission lumineuse peut être un rétro-éclairage de la touche correspondante ou un allumage d'une diode électroluminescente désignant la touche correspondante. Pour un clavier d'un téléphone mobile par exemple, le déverrouillage du clavier peut se faire par appui sur chaque touche rétro-éclairée séquentiellement de façon aléatoire. A chaque appui, on confirme que l'on a bien visualisé la touche éclairée. L'appui correct de toute la séquence valide le déverrouillage du clavier.

Selon un autre aspect de l'invention, il est proposé un dispositif ou appareil mettant en oeuvre un procédé d'activation d'un mécanisme au moyen d'une séquence de consignes {*x₁*, ..., *xₙ*} de longueur n fournie à un utilisateur qui doit valider cette séquence pour activer ledit mécanisme.

Ce dispositif comprend une unité de traitement configurée pour déterminer la séquence de consignes {*x₁*, ..., *xₙ*} de façon aléatoire, et pour chaque consigne *xᵢ* :
- émettre une consigne *xᵢ* vers l'utilisateur,
- réceptionner une réponse *yᵢ* de l'utilisateur,
- analyser de façon à valider la consigne *xᵢ* ; la consigne *xᵢ* est dite validée lorsque *yᵢ* est une réponse valable pour *xᵢ* et que le temps écoulé entre l'émission de *xᵢ* et la réception de *yᵢ* est inférieur à une durée Δ*ᵢ* impartie ; si la consigne *xᵢ* n'est pas validée alors le mécanisme n'est pas activé ;
- émettre la consigne suivante, si elle existe, après validation de x*ᵢ* ;
- activer le mécanisme lorsqu'au moins la dernière consigne émise est validée.

Bien entendu, les différentes caractéristiques, formes et variantes de réalisation de l'invention peuvent être associées les unes avec les autres selon diverses combinaisons dans la mesure où elles ne sont pas incompatibles ou exclusives les unes des autres.

### Description des figures et modes de réalisation

D'autres avantages et caractéristiques de l'invention apparaîtront à l'examen de la description détaillée d'un mode de mise en oeuvre nullement limitatif, et des dessins annexés, sur lesquels :
- La figure 1 est une vue illustrant un processus de validation globale du procédé selon l'invention ;
- La figure 2 est une vue illustrant une succession de consignes selon l'invention ;
- La figure 3 est une vue illustrant un processus de validation d'une consigne selon l'invention ;
- La figure 4 est une vue illustrant un algorithme de déverrouillage d'un clavier de téléphone mobile pour la mise en oeuvre du procédé selon l'invention ;
- Les figures 5 à 7 sont des vues illustrant trois touches rétro-éclairées successivement selon l'invention ; une consigne peut être le rétro-éclairage d'une de ces touches ; la réponse attendue dans ce cas est l'appui par l'utilisateur de la touche dont le rétro éclairage est allumé.

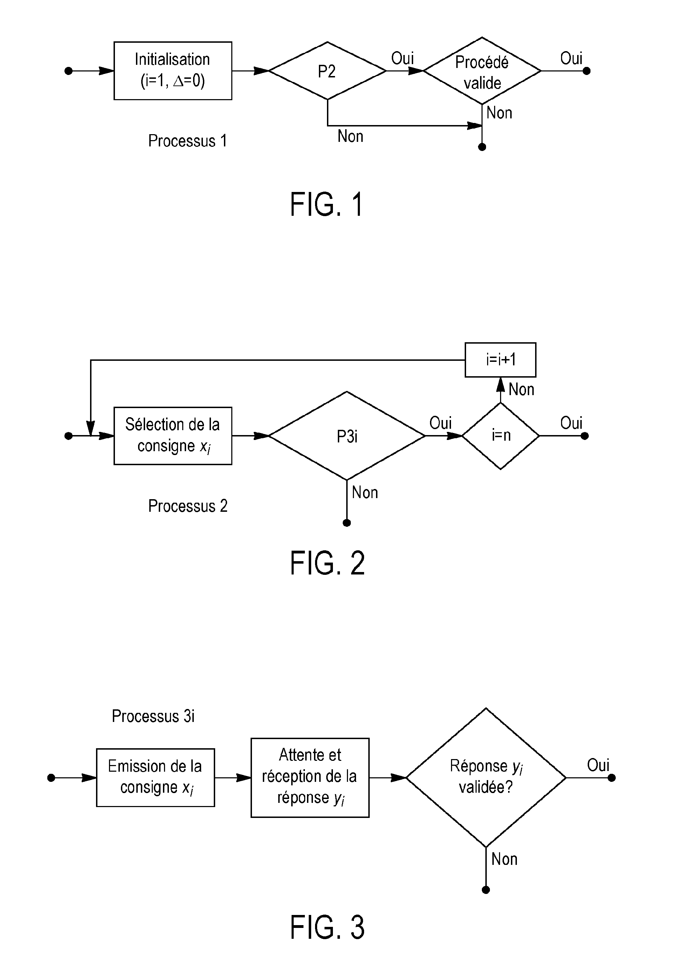

La figure 1 présente le processus 1, noté P1.
- P1 débute par une étape d'initialisation. Dans cette étape une temporisation globale peut être initialisée. Une séquence de consigne peut être ou non prédéterminée. Une variable *i* est initialisée à la valeur 1. Une variable n est initialisée. Lorsque la séquence de consignes est prédéterminée, la variable n est égale à la longueur de la séquence de consigne. Si la variable n n'est pas prédéfinie, elle est initialisée à une valeur aléatoire, nombre entier naturel compris entre *n₁* et *n₂* dépendants de l'application.
- P1 se poursuit par l'exécution d'un processus 2, noté P2 et est décrit dans la Figure 2 pour l'émission successive des consignes.
- Lorsque le résultat de P2 est « oui » c'est-à-dire validation de la dernière consigne , P1 se poursuit par l'étape de validation du procédé. Le procédé est validé lorsqu'au moins P2 a « oui » pour résultat. Une condition supplémentaire de validation, non limitative, peut être la validation de la temporisation globale si elle a été initialisée.

Lorsque le processus est validé, celui-ci se termine par la sortie ayant pour résultat « oui ». Dans le cas contraire, il se termine par la sortie ayant pour résultat « non ».

Plus précisément, P2 sur la Figure 2 comprend une entrée et deux sorties. Une sortie a pour résultat « oui ».

L'autre a pour résultat « non ».
- P2 débute par la sélection de la consigne relative à la variable *i*.
   o lorsque P1 n'a pas prédéterminé la séquence de consignes, la sélection de consigne consiste en une génération aléatoire de la consigne xᵢ;
   o lorsque P1 a prédéterminé la séquence de consignes, la sélection de consigne consiste en la sélection de la i-ème consigne de la séquence de consignes.
- P2 se poursuit par l'exécution du processus 3i noté P3i qui est décrit sur la Figure 3. Lorsque le résultat de P3i est « oui », P2 se poursuit par une étape de comparaison de la valeur de la variable *i* avec celle de la variable *n,* initialisée par P1.
   o si la variable i est différente de la variable n, alors la variable i est incrémentée et le processus 2 continue par la sélection de la consigne relative à la nouvelle variable i ;
   o sinon, le processus 2 se termine par la sortie ayant pour résultat « oui ».

Sur la Figure 3, P3i comprend une entrée et deux sorties. Une sortie a pour résultat « oui ». L'autre a pour résultat « non ».
- P3i débute par l'émission de la consigne xᵢ. L'émission peut consister, sans être limitatif, en l'allumage du rétro éclairage d'une touche de clavier ou d'une zone d'écran. Elle peut aussi être un énoncé audio comme le nom d'une touche de clavier ou encore la description d'un mouvement.
- P3i se poursuit par l'attente d'une réponse de la part de l'utilisateur.
   La réponse peut consister, sans être limitatif, en l'appui d'une touche de clavier répondant à la consigne, en la sélection d'une zone d'écran ou encore en une réponse vocale.

Lorsque la réponse est reçue, le processus de P3i détermine si la consigne x*ᵢ* est validée. Celle-ci est validée lorsque la réponse reçue est valable et que l'utilisateur a répondu dans le temps imparti. Si la consigne est validée, le processus P3i se termine par la sortie « oui ». Dans le cas contraire, il se termine par la sortie « non ».

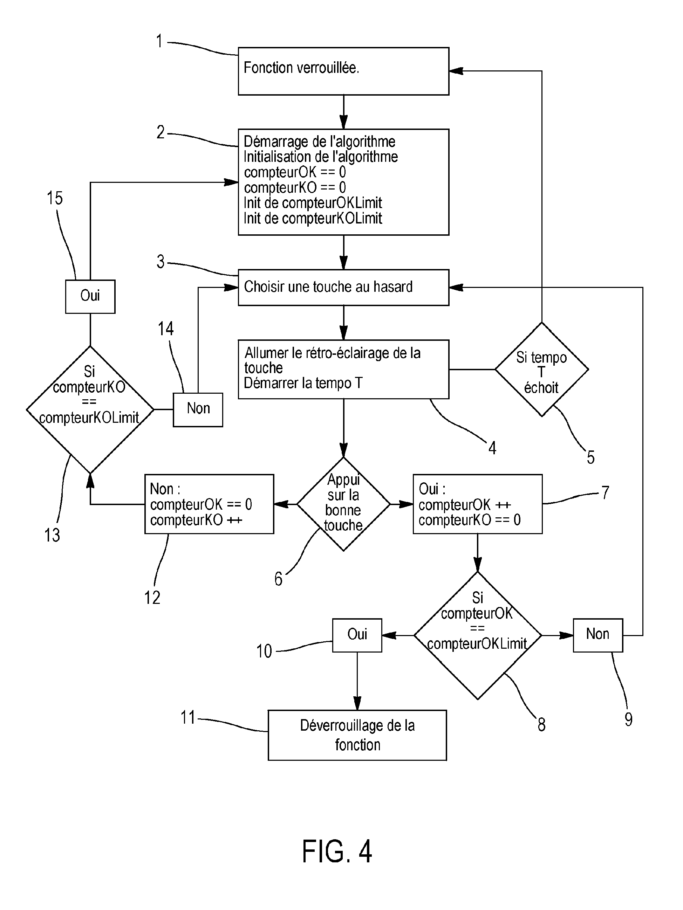

On va maintenant décrire en référence aux figures 4 à 7 un procédé selon l'invention mis en oeuvre dans un mécanisme de déverrouillage d'un clavier de téléphone mobile 16.

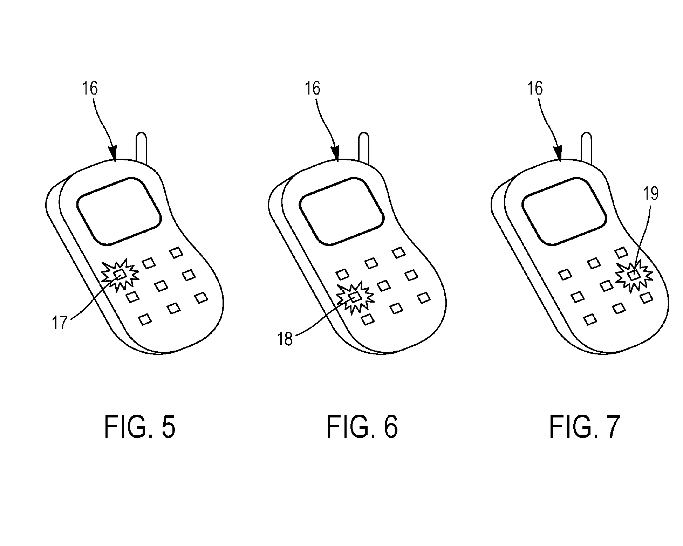

Sur la figure 4, à l'étape 1, la fonction que l'on cherche à activer est verrouillée. Cette fonction peut être l'activation du clavier du téléphone 16 des figures 5 à 7. C'est-à-dire que les touches du clavier du téléphone 16 ne sont pas actives. Le procédé selon l'invention est mis en oeuvre par le système d'exploitation du téléphone mobile 16 sous la forme d'un algorithme qui démarre à l'étape 2 en réponse par exemple à l'appui de l'utilisateur sur une touche quelconque. Pour ce faire, on initialise l'algorithme selon l'invention en mettant un compteur compteurOK à zéro, en mettant un compteur compteurKO à zéro, en définissant une valeur limite compteurOKLimit pour le compteurOK, et en définissant une autre valeur limite compteurKOLimit pour le compteurKO. Le compteurOKLimit peut être la longueur n d'une séquence à émettre. A titre d'exemple n peut être égal à trois. Cela signifie que la séquence comporte trois consignes aléatoires, soit trois touches à valider.

A l'étape 3, l'algorithme selon l'invention génère une consigne aléatoire qui est le choix de la touche 17 du téléphone 16. A l'étape 4, on allume par rétro-éclairage la touche choisie et on démarre une temporisation T. Sur la figure 5, on voit que la touche 17 est rétro-éclairée. La temporisation T mesure la durée pendant laquelle la touche choisie reste éclairée. Si la touche éclairée n'est pas appuyée par l'utilisateur pendant la durée T, alors la temporisation T échoit à l'étape 5 et l'algorithme retourne à l'état de départ, mécanisme verrouillé.

Si pendant la durée T, une réponse est envoyée (ici une touche est appuyée) à l'étape 6, on vérifie que la réponse est valable (ici s'il s'agit de la touche 17 ou non).

Dans le cas affirmatif de l'étape 6, on incrémente le compteurOK à l'étape 7 et on impose le compteurKO à zéro. On vérifie ensuite à l'étape 8 si le compteurOK atteint la valeur limite compteurOKLimit. Si tel n'est pas le cas à l'étape 9, on retourne à l'étape 3 pour choisir de façon aléatoire une nouvelle touche 18 par exemple, puis 19 comme on le voit sur les figures 6 et 7. Pour chaque touche 18 et 19, on réalise les étapes 3, 4, 6, 7, 8 et 9. Lorsque les trois touches 17, 18 et 19 sont appuyées par l'utilisateur en réponse à un rétro-éclairage, le compteurOK atteint sa valeur limite de trois et on passe alors à l'étape 10 puis à l'étape 11 pour un déverrouillage du clavier.

Dans la négation à l'étape 6, on incrémente le compteurKO à l'étape 12 et on impose le compteurOK à zéro. On vérifie ensuite à l'étape 13 si le compteurKO atteint la valeur limite compteurKOLimit. Si tel n'est pas le cas à l'étape 14, on retourne à l'étape 3 pour choisir de façon aléatoire une nouvelle touche au hasard. Cette nouvelle touche est la première d'une série de trois. Il s'agit de la première consigne de la séquence selon l'invention. En fait, on recommence l'algorithme tout en comptabilisant l'échec survenu à l'étape 6. Si on réalise plusieurs échecs et qu'on atteint une valeur limite compteurKOLimit, alors à l'étape 15 l'algorithme est réinitialisé avec notamment de nouvelles valeurs de compteurOKLimit et compteurKOLimit.

Bien sûr, l'invention n'est pas limitée aux exemples qui viennent d'être décrits et de nombreux aménagements peuvent être apportés à ces exemples sans sortir du cadre de l'invention. On peut envisager l'application de la présente invention pour l'activation de toute fonction d'un appareil, notamment pour valider une commande telle une commande de mise à feu d'un missile par exemple. La consigne visuelle peut donc être un rétro-éclairage d'une touche de clavier mécanique ou sur un écran tactile, une LED (diode électroluminescente) indiquant quelle touche appuyer, par exemple, une LED placée à proximité de chaque touche.

## Revendications

1. Procédé d'activation d'un mécanisme au moyen d'une séquence de consignes {*x₁*, ..., *xₙ*} de longueur n fournie à un utilisateur qui doit valider cette séquence pour activer ledit mécanisme,
**caractérisé en ce qu'**on détermine la séquence de consignes {*x₁*, ..., *xₙ*} de façon aléatoire, et pour chaque consigne *xᵢ*, le procédé comprend les étapes de :
- émission d'une consigne *xᵢ* vers l'utilisateur,
- réception d'une réponse *yᵢ* de l'utilisateur,
- analyse pour validation de la consigne *xᵢ* ; la consigne *xᵢ* est dite validée lorsque *yᵢ* est une réponse valable pour *xᵢ* et que le temps écoulé entre l'émission de *xᵢ* et la réception de *yᵢ* est inférieur à une durée Δ*ᵢ* impartie ; si la consigne *xᵢ* n'est pas validée alors le mécanisme n'est pas activé ;
- émission de la consigne suivante, si elle existe, après validation de *xᵢ* ;
- activation du mécanisme lorsqu'au moins la dernière consigne émise est validée.

2. Procédé selon la revendication 1, **caractérisé en ce que** le mécanisme est activé lorsqu'au moins la dernière consigne est validée et qu'une durée définie en fonction de chaque temps écoulé entre une émission d'une consigne xᵢ et une réception d'une réponse yᵢ correspondante est inférieure à une durée Δ impartie.

3. Procédé selon l'une quelconque des revendications précédentes, **caractérisé en ce que** la séquence aléatoire est prédéterminée.

4. Procédé selon l'une quelconque des revendications 1 ou 2, **caractérisé en ce que** chaque consigne est déterminée aléatoirement juste avant son émission.

5. Procédé selon l'une quelconque des revendications précédentes, **caractérisé en ce que** n est choisi dans l'intervalle [*n₁, n₂*] avec *n₁* et *n₂* dépendant du mécanisme.

6. Procédé selon l'une quelconque des revendications précédentes, **caractérisé en ce que** ladite longueur n est choisie aléatoirement.

7. Procédé selon l'une quelconque des revendications précédentes, **caractérisé en ce qu'**au moins une consigne *xᵢ* est une consigne visuelle.

8. Procédé selon l'une quelconque des revendications précédentes, **caractérisé en ce que** au moins une consigne *xᵢ* est une consigne sonore vers l'utilisateur.

9. Procédé selon l'une quelconque des revendications précédentes, **caractérisé en ce qu'**au moins une réponse *yᵢ* est une réponse de contact avec un dispositif d'interfaçage.

10. Procédé selon la revendication 9, **caractérisé en ce qu'**au moins une réponse *yᵢ* est une réponse de contact par sélection d'une touche dudit dispositif d'interfaçage.

11. Procédé selon l'une quelconque des revendications précédentes, **caractérisé en ce que** la séquence de consignes {*x₁*, ..., *xₙ*} comprend une suite de touches d'un clavier ; l'émission d'une consigne de la suite consistant à indiquer par émission lumineuse une touche correspondante.

12. Procédé selon la revendication 11, **caractérisé en ce que** l'émission lumineuse est un rétro-éclairage de la touche correspondante ou un allumage d'une diode électroluminescente désignant la touche correspondante.

13. Dispositif mettant en oeuvre un procédé d'activation d'un mécanisme au moyen d'une séquence de consignes {*x₁*, ..., *xₙ*} de longueur n fournie à un utilisateur qui doit valider cette séquence pour activer ledit mécanisme selon l'une quelconque des revendications précédentes,
**caractérisé en ce que** ce dispositif comprend une unité de traitement configurée pour déterminer la séquence de consignes {*x₁*, ..., *xₙ*} de façon aléatoire, et pour chaque consigne *xᵢ* :
- émettre une consigne *xᵢ* vers l'utilisateur,
- réceptionner une réponse *yᵢ* de l'utilisateur,
- analyser de façon à valider la consigne *xᵢ* ; la consigne *xᵢ* est dite validée lorsque *yᵢ* est une réponse valable pour *xᵢ* et que le temps écoulé entre l'émission de *xᵢ* et la réception de *yᵢ* est inférieur à une durée Δ*ᵢ* impartie ; si la consigne *xᵢ* n'est pas validée alors le mécanisme n'est pas activé ;
- émettre la consigne suivante, si elle existe, après validation de *xᵢ* ;
- activer le mécanisme lorsqu'au moins la dernière consigne émise est validée.
